# EUROPEAN PATENT SPECIFICATION

(11) **EP 4 546 670 B1**
(45) Date of publication and mention of the grant of the patent: **05.08.2026**
(21) Application number: 22955743.4
(22) Date of filing: 19.08.2022
(51) Int. Cl.: H04B 10/27, H04B 10/61, H04B 10/69, H04Q 11/00

(54) **OPTICAL EXCHANGE DEVICE AND OPTICAL EXCHANGE METHOD**
OPTISCHE AUSTAUSCHVORRICHTUNG UND OPTISCHES AUSTAUSCHVERFAHREN
DISPOSITIF D'ÉCHANGE OPTIQUE ET PROCÉDÉ D'ÉCHANGE OPTIQUE

(43) Date of publication of application: 30.04.2025
(73) Proprietor: MITSUBISHI ELECTRIC CORPORATION, Chiyoda-ku Tokyo 100-8310 (JP)
(72) Inventor: YOSHIDA, Tsuyoshi, Tokyo 100-8310 (JP)
(74) Representative: Plasseraud IP
(86) International application number: PCT/JP2022/031286
(87) International publication number: WO 2024/038569

(56) References cited:
- WO-A1-2020/217312
- JP-A- 2013 143 746
- JP-A- H08 167 877
- JP-A- H08 237 289
- US-B1- 9 838 131
- US-B2- 9 479 260

## Description

### TECHNICAL FIELD

The present disclosure technology relates to an optical exchange device and an optical exchange method.

### BACKGROUND ART

It is known that an optical transport network (OTN) is used in what is called a fifth generation mobile communication system referred to as 5G.

For example, Non Patent Literature 1 discloses many examples of an OTN network connected to a 5G network (see FIGS. 8-4 to 8-10 of Non Patent Literature 1). Here, in the present specification, a wide area optical network is referred to as a "wide area optical network". In addition, in the present specification, a local optical network is referred to as a "local optical network".

As exemplified in Non Patent Literature 1, in general, traffic of a finite length transmitted from a local optical network is managed separately for each service type, converted into a continuous signal via an electrical routing device, and then optically transmitted over a long distance and with a large capacity in a wide area optical network. That is, in general, in a network including a wide area optical network and a local optical network, a routing device is provided on the local optical network side, and the routing device decodes destination information and performs routing. In addition, it can be said that a wide area optical exchange device is prepared on the wide area optical network side for each service type or for each destination.

### CITATION LIST

### NON PATENT LITERATURE

Non Patent Literature 1: The Telecommunication Technology Committee, "Technical report of Application of OTN to 5G Transport", TR-1084, 1.0 edition, March 11, 2020.
US 9 479 260 B2 discloses a known single carrier flexible bit rate transceiver for coherent optical network.

### TECHNICAL PROBLEM

As described above, in the conventional network including the wide area optical network and the local optical network, a load of electrical processing for decoding control information such as a destination and thereby routing is large in the routing device. When various types and large amounts of data are transmitted, a processing delay depending on the processing capability of the routing device occurs.

In the technical field of networks each including a wide area optical network and a local optical network, a mechanism for "a wide area optical network to be able to directly accommodate a finite length signal from a local optical network" in which a processing delay does not occur is demanded.

An object of the present disclosure technology is to provide a mechanism for "a wide area optical network to be able to directly accommodate a finite length signal from a local optical network".

### SOLUTION TO PROBLEM

The invention is set out in the appended set of claims.

### ADVANTAGEOUS EFFECTS OF INVENTION

Since the optical exchange device according to the present disclosure technology has the above configuration, the wide area optical network can directly accommodate the finite length signal from the local optical network.

### BRIEF DESCRIPTION OF DRAWINGS

FIG. 1 is a block diagram illustrating a functional configuration of an optical exchange device according to a first embodiment.
FIG. 2 is an explanatory diagram illustrating an example of handling of a signal received from a local parent analog-digital converting unit 14 by an exchange unit 20 of the optical exchange device according to the first embodiment.
FIG. 3 is an explanatory diagram illustrating an example of handling of a signal received from a wide area reception digital signal processing unit 38 by the exchange unit 20 of the optical exchange device according to the first embodiment.
FIG. 4 is an explanatory diagram illustrating a connection example of the optical exchange device according to the present disclosure technology.

### DESCRIPTION OF EMBODIMENTS

### First Embodiment.

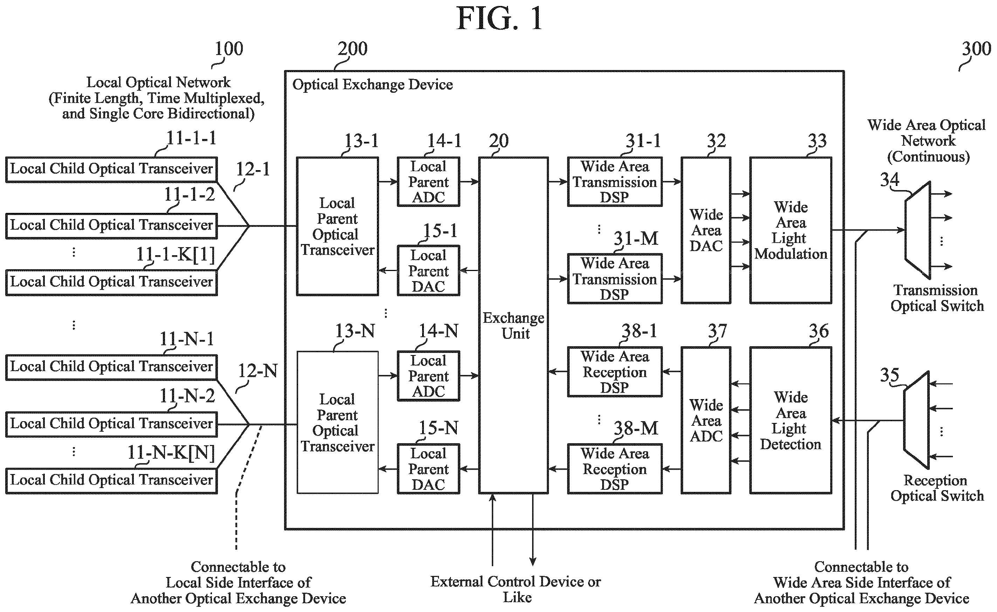

FIG. 1 is a block diagram illustrating a functional configuration of an optical exchange device 200 according to a first embodiment. As illustrated in FIG. 1, the optical exchange device 200 is a device that connects a local optical network 100 and a wide area optical network 300. As illustrated in FIG. 1, the optical exchange device 200 according to the first embodiment includes N (N is a natural number) local parent optical transceivers 13, N local parent analog-digital converting units 14, N local parent digital-analog converting units 15, an exchange unit 20, M (M is a natural number) wide area transmission digital signal processing units 31, wide area digital-analog converting units 32, a wide area light modulating unit 33, a wide area light detecting unit 36, a wide area analog-digital converting unit 37, and M wide area reception digital signal processing units 38.

The local optical network 100 assumed by the optical exchange device 200 according to the first embodiment includes a plurality of local child optical transceivers 11 and optical transmission lines 12 connecting the plurality of local child optical transceivers 11 and the N local parent optical transceivers 13.

The wide area optical network 300 assumed by the optical exchange device 200 according to the first embodiment includes a transmission optical switch 34 and a reception optical switch 35.

In the present specification, names of main signals handled by the optical exchange device 200 according to the first embodiment are as described in the following table.

**Table 1 Signal Name**

| Name of Signal | Source | Destination |
|---|---|---|
| Wide Area transmission Digital Signal | Exchange Unit 20 | Wide Area Transmission Digital Signal Processing Unit 31 |
| Wide Area Transmission Analog Electrical Signal | Wide Area Digital-Analog Converting Unit 32 | Wide Area Light Modulating Unit 33 |
| Wide Area Reception Digital Signal | Wide Area Reception Digital Signal Processing Unit 38 | Exchange Unit 20 |
| Wide Area Reception Analog Electrical Signal | Wide Area Light Detecting Unit 36 | Wide Area Analog-Digital Converting Unit 37 |
| Local Transmission Digital Signal | Exchange Unit 20 | Local Parent Digital-Analog Converting Unit 15 |
| Local Transmission Analog Electrical Signal | Local Parent Digital-Analog Converting Unit 15 | Local Parent Optical Transceiver 13 |
| Local Reception Digital Signal | Local Parent Analog-Digital Converting Unit 14 | Exchange Unit 20 |
| Local Reception Analog Electrical Signal | Local Parent Optical Transceiver 13 | Local Parent Analog-Digital Converting Unit 14 |
| Intensity-Modulated Signal or Intensity-Modulated Optical Signal | Local Child Optical Transceiver 11 | Local Parent Optical Transceiver 13 |
| | Local Parent Optical Transceiver 13 | |

### <<Local Optical Network 100>>

In the technical field of information communication, a local side is used as a term meaning a client side. Further, a wide area side that is paired with the local side is used as a term meaning a line side or a transmission path side. The term "local" used in the name of the local optical network 100 is intended to mean a confined location, as the dictionary implies.

In the local optical network 100 assumed by the optical exchange device 200 according to the first embodiment, a plurality of child optical transceivers is connected to one parent optical transceiver. In the example illustrated in FIG. 1, a plurality of local child optical transceivers 11 (11-1-1, 11-1-2, ..., 11-1-K[1]) is connected to a first local parent optical transceiver 13 (13-1) by a first optical transmission line 12 (12-1). As described above, the sign of "-n" (n is a variable that can take 1 to N) added after the number used in the present specification indicates a functional block related to the n-th transmission sequence. In the example illustrated in FIG. 1, the total number of local child optical transceivers 11 is K[1] + K[2] + ... + K[n] + ... + K[N].

As illustrated in FIG. 1, each of the n-th optical transmission lines 12-n is partially shared. In addition, each of the optical transmission lines 12-n can be connected to a local-side interface related to another optical exchange device (not illustrated, 200-other).

A finite length, more specifically, a burst signal-like intensity-modulated signal is output from the local child optical transceiver 11. The burst signal means a signal that is present only in a small part and no signal is present in the other part when observed in the time domain. Note that the intensity-modulated signal output from the local child optical transceiver 11 is sometimes referred to as an "intensity-modulated optical signal" by emphasizing that it is an optical signal.

The intensity-modulated signal output from the local child optical transceiver 11 is time-division multiplexed.

Note that it is desirable to appropriately adjust the power of light transmitted from the local child optical transceiver 11 in such a way that it is possible to achieve both suppressing the resolution needed in the local parent analog-digital converting unit 14-n to be described later and ensuring the power jet.

The optical transmission line 12-n is generally constituted by a single core optical fiber, and implements bidirectional communication between the local child optical transceiver 11-n-k (k is a variable that can take 1 to K[n]) and the local parent optical transceiver 13-n. In the optical transmission line 12-n, in order to prevent a collision between the upstream direction (the direction from the child to the parent) and the downstream direction (the direction from the parent to the child), measures such as changing the value of the optical wavelength are taken.

The local child optical transceiver 11-n-k in the terminal of the local optical network 100 directly detects the intensity-modulated optical signal transmitted from the local parent optical transceiver 13-n and input via the optical transmission line 12-n, determines a symbol, and demodulates the signal to original data.

Here, the symbol means a period or time during which a certain state continues in digital modulation. As a related term, there is a symbol rate, which is the number of symbols changing per unit time, and [symbol/s] is used as a unit. The symbol rate is also referred to as a baud rate (unit is [Baud]) or a modulation rate.

The symbol rate is associated with an occupied frequency band. When the symbol rate is large, the occupied frequency band is wide. For this reason, multi-level modulation capable of transmitting a large amount of information while saving limited frequency resources, that is, having the same symbol rate and a large bit rate is an effective means.

As described above, the local optical network 100 assumed by the optical exchange device 200 according to the first embodiment has properties that the plurality of local child optical transceivers 11 is connected to one local parent optical transceiver 13, the optical transmission line 12 between the local parent optical transceiver 13 and the local child optical transceivers 11 is partially shared, an intensity-modulated signal of a finite length is output from the local child optical transceiver 11, and the intensity-modulated signal is time-division multiplexed.

### <<Wide Area Optical Network 300>>

The term "wide area" used in the name of the wide area optical network 300 is intended to mean a wide area, as the dictionary implies. In general, a wide area network connects large areas in a city, between cities, or between countries.

The wide area optical network 300 assumed by the optical exchange device 200 according to the first embodiment can accommodate a plurality of virtual optical channels by one optical transceiver. Each virtual optical channel can be treated as an independent optical wavelength. Here, the meaning of the term "virtual" represents that actually a plurality of optical channels can be simultaneously output although the interface is physically one optical transceiver.

By this action, the wide area optical network 300 can accommodate different types of services with a large capacity while having a low delay, and can communicate with different points.

Signals handled by the wide area optical network 300 are polarization multiplexed, quadrature amplitude modulated, or subcarrier multiplexed signals. The reception side of the wide area optical network 300 performs coherent detection and performs correction such as waveform distortion compensation and code error correction by digital signal processing.

Details of the transmission optical switch 34 and the reception optical switch 35 included in the wide area optical network 300 will be apparent from the following description.

### <<Optical Exchange Device 200>>

As described above, the optical exchange device 200 connects the local optical network 100 and the wide area optical network 300. Details of the optical exchange device 200 will be apparent from the description of each functional block described later.

### <<Local Parent Optical Transceiver 13 Constituting Optical Exchange Device 200>>

The local parent optical transceiver 13 constituting the optical exchange device 200 is a component that generates and detects an intensity-modulated optical signal.

The local parent optical transceiver 13-n constituting the optical exchange device 200 directly detects the intensity-modulated optical signal transmitted from the local child optical transceiver 11-n-k and input via the optical transmission line 12-n, but does not determine the symbol. The signal obtained by the direct detection in the local parent optical transceiver 13 is referred to as a "local reception analog electrical signal" in the present specification. The local reception analog electrical signal is transmitted to the local parent analog-digital converting unit 14-n.

In the assumption of the present disclosure technology, it is assumed that the signal transmitted to the local parent analog-digital converting unit 14-n, that is, the local reception analog electrical signal may be temporally multiplexed with a finite length signal having a different baud rate or a different degree of multi-level modulation (sometimes referred to as "modulation multi-level degree"). The local reception analog electrical signal assumed by the present disclosure technology may be obtained by, for example, temporally multiplexing an on-off-keying signal of 10 [Gb/s] and a quaternary PAM signal of 50 [Gb/s].

A technical feature of the optical exchange device 200 according to the present disclosure technology is that sampling is performed without considering a signal format, and traffic accommodation is performed without depending on a protocol. Performing traffic accommodation in a protocol-independent manner without being aware of the signal format is referred to as "direct accommodation" in the present specification.

### <<Local Parent Analog-Digital Converting Unit 14 Constituting Optical Exchange Device 200>>

The local parent analog-digital converting unit 14-n constituting the optical exchange device 200 is a component that samples the local reception analog electrical signal transmitted from the local parent optical transceiver 13-n. A signal obtained by the sampling in the local parent analog-digital converting unit 14 is referred to as a "local reception digital signal" in the present specification.

The local reception digital signal is transmitted to the exchange unit 20.

As described above, a technical feature of the optical exchange device 200 according to the present disclosure technology is that sampling is performed without considering a signal format, and traffic accommodation is performed without depending on a protocol. Therefore, in compensation for, the local parent analog-digital converting unit 14 needs to perform sampling depending on the signal format having the most severe conditions. For example, the local parent analog-digital converting unit 14 performs sampling at a sampling rate of 50 [Gsample/s] which is the most severe, or 100 [Gsample/s] which is twice the most severe sampling rate in further consideration of a safety factor. Furthermore, in this example, the local parent analog-digital converting unit 14 performs sampling with a resolution of at least equal to or more than 2 [bit], that is, the quantization bit number. As in the case of not using the multi-value signal (in the case of only the binary signal), the sampling may be the minimum 1 [bit], but in any case, the local parent analog-digital converting unit 14 needs to have a resolution capable of supporting any assumed signal format.

In this manner, it can be said that there is a trade-off relationship between a condition for a signal, such as up to which range of signal the traffic can be accommodated without protocol dependency, and a condition for the local parent analog-digital converting unit 14, such as the sampling rate and the quantization bit number. The present disclosure technology implements traffic accommodation without protocol dependency by accepting the most severe conditions regarding the sampling rate and the quantization bit number in the local parent analog-digital converting unit 14.

### <<Local Parent Digital-Analog Converting Unit 15 Constituting Optical Exchange Device 200>>

The local parent digital-analog converting unit 15 constituting the optical exchange device 200 is a component that converts a digital signal (hereinafter, referred to as "exchanged digital signal") transmitted from the exchange unit 20 into an analog signal. In the local parent digital-analog converting unit 15, an analog signal obtained by digital-analog conversion is referred to as a "local transmission analog electrical signal" in the present specification.

The local transmission analog electrical signal is transmitted to the local parent optical transceiver 13-n.

Note that, from the viewpoint of achieving both the resolution and the power jet, it is desirable that the local parent digital-analog converting unit 15 appropriately adjust the amplitude in the digital region before conversion.

### <<Exchange Unit 20 Constituting Optical Exchange Device 200>>

Simply put, the exchange unit 20 constituting the optical exchange device 200 is a component that distributes and outputs input signals. The processing performed by the exchange unit 20 is referred to as "exchange processing" in the present specification. The exchange unit 20 constituting the optical exchange device 200 is implemented by a processing circuit as hardware.

Signals input to the exchange unit 20 are a local reception digital signal from the local parent analog-digital converting unit 14-n (n = 1, 2, ..., N) and a wide area reception digital signal from the wide area reception digital signal processing unit 38-m (m = 1, 2, ..., M). Details of the wide area reception digital signal processing unit 38-m and the wide area reception digital signal will be apparent from the following description.

Signals output from the exchange unit 20 are wide area transmission digital signals transmitted to the wide area transmission digital signal processing unit 31-m₂ (m₂ = 1, 2, ..., M), and local transmission digital signals transmitted to the local parent digital-analog converting unit 15-n₂ (n₂ = 1, 2, ..., N). Details of the wide area transmission digital signal processing unit 31-m₂ and the wide area transmission digital signal will be apparent from the following description.

Although various paths are generated by the exchange processing performed in the exchange unit 20, the paths can be roughly classified into four types. The four types of paths generated by the exchange processing are local → local, local → wide area, wide area → local, and wide area → wide area.

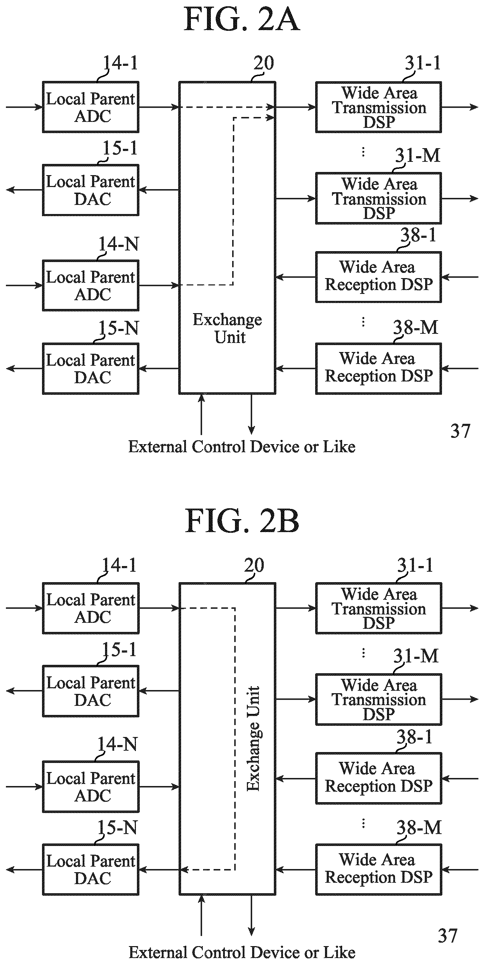

FIG. 2 is an explanatory diagram illustrating an example of handling of a signal received from the local parent analog-digital converting unit 14, by the exchange unit 20 of the optical exchange device 200 according to the first embodiment. In FIG. 2A in FIG. 2, a broken line indicates local → wide area among the four types of paths generated by the exchange processing of the exchange unit 20. In FIG. 2B in FIG. 2, a broken line indicates local → local among the four types of paths generated by the exchange processing of the exchange unit 20.

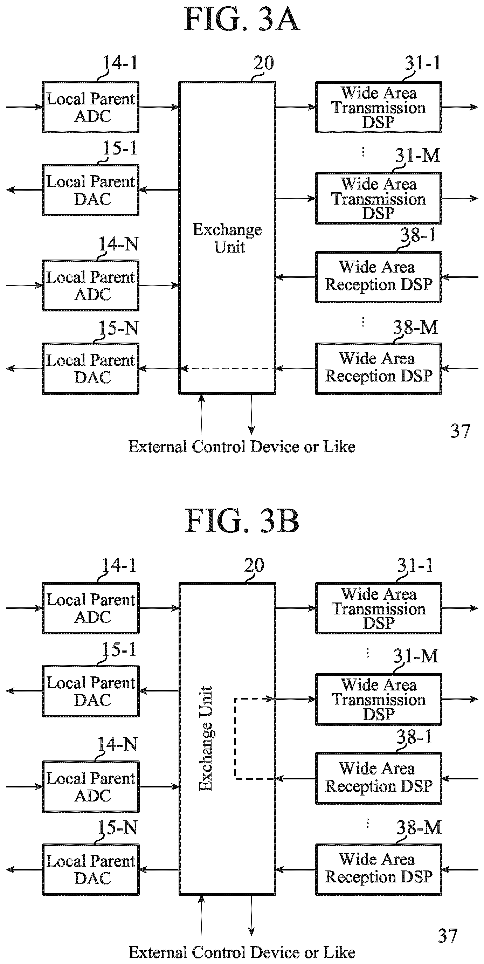

FIG. 3 is an explanatory diagram illustrating an example of handling of a signal received from the wide area reception digital signal processing unit 38, by the exchange unit 20 of the optical exchange device 200 according to the first embodiment. In FIG. 3A in FIG. 3, a broken line indicates wide area → local among the four types of paths generated by the exchange processing of the exchange unit 20. In FIG. 3B in FIG. 3, a broken line indicates wide area → wide area among the four types of paths generated by the exchange processing of the exchange unit 20.

The exchange processing performed in the exchange unit 20 can implement, for example, distribution of signals to a plurality of paths, allocation from a plurality of local optical networks 100 to a single virtual optical channel (also referred to as "signal aggregation"), switching of a physical frequency related to the virtual optical channel, and the like. Here, the distribution of the signals to the plurality of paths also includes a case where a signal is divided into portions and distributed and a case where the same signal is duplicated and distributed (in the case of multicast).

The exchange processing is performed in accordance with the exchange rule. In the optical exchange device 200 according to the first embodiment, the exchange unit 20 is configured in such a way that the exchange rule can be changed by an instruction from the outside (hereinafter, referred to as "monitoring control signal"). That is, the exchange rule is treated as being changeable with the lapse of time in the optical exchange device 200 according to the present disclosure technology. Note that, in FIGS. 2 and 3, a portion indicated as "external control device or the like" represents the outside that changes the exchange rule by the monitoring control signal. Note that, in the present disclosure technology, the monitoring control signal may be implemented by external software. How the monitoring control signal is implemented is not an essential matter for the present disclosure technology.

In the optical exchange device 200 according to the first embodiment, the exchange unit 20 is configured in such a way as to be able to output information (hereinafter, referred to as "monitoring control information") such as short-time average power of an input signal, a bit error rate on the wide area side, or an amount of information to the outside.

The processing performed in the exchange unit 20 includes a portion that holds a signal from the local optical network 100 as a digital value, but this partial processing can also be said to be a concept similar to the RoF (Radio-over-Fiber). If a naming mode of RoF is imitated, it can be said that this partial processing is AoC (Access-over-Coherent) since it adds a signal of an access network to a coherent signal.

### <<Wide Area Transmission Digital Signal Processing Unit 31 Constituting Optical Exchange Device 200>>

The wide area transmission digital signal processing unit 31 constituting the optical exchange device 200 is a component that performs digital signal processing such as encoding and spectrum shaping.

More specifically, the wide area transmission digital signal processing unit 31-m constituting the optical exchange device 200 is a component that generates a transmission subcarrier signal for coherent optical communication on the basis of the wide area transmission digital signal transmitted from the exchange unit 20. m (m = 1, 2, ..., M) in a reference sign representing the wide area transmission digital signal processing unit 31-m may be referred to as a "subcarrier number" for identifying a subcarrier. M represents the total number of subcarriers. Specifically, the total number of subcarriers (M) is assumed to be equal to or more than four.

The transmission subcarrier signal generated by the wide area transmission digital signal processing unit 31 is transmitted to the wide area digital-analog converting unit 32.

The wide area transmission digital signal processing unit 31 may perform, for example, each processing such as frame generation on the transmission path side, partial scrambling, encoding for stochastic shaping of signal point arrangement, error correction encoding, symbol generation, spectrum shaping, and the like. The transmission subcarrier signal processed by the wide area transmission digital signal processing unit 31 is transmitted to the wide area digital-analog converting unit 32.

Between a certain finite length data and another finite length data transmitted from the local optical network 100, most of the data has a power value near 0. Therefore, the optical exchange device 200 according to the present disclosure technology may perform simple compression processing in the wide area transmission digital signal processing unit 31 to obtain efficient signal transmission. The compression process performed by the wide area transmission digital signal processing unit 31 of the optical exchange device 200 may be, for example, a process to which the method described in WO 2020/174574 A is applied.

### <<Wide Area Digital-Analog Converting Unit 32 Constituting Optical Exchange Device 200>>

Simply put, the wide area digital-analog converting unit 32 constituting the optical exchange device 200 is a component that multiplexes a plurality of subcarriers and collectively converts the subcarriers into an analog electrical signal.

More specifically, the wide area digital-analog converting unit 32 constituting the optical exchange device 200 is a component that performs the following two processes. First, the wide area digital-analog converting unit 32 frequency-multiplexes the M transmission subcarrier signals transmitted from the M wide area transmission digital signal processing units 31 (31-1, 31-2, ..., 31-M). Here, each of the M transmission subcarrier signals is a digital signal. As described above, M, which is also the total number of subcarriers, is assumed to be equal to or more than four. Secondly, the wide area digital-analog converting unit 32 converts the frequency-multiplexed digital signal into an analog signal. The analog signal converted by the wide area digital-analog converting unit 32 is referred to as a "wide area transmission analog electrical signal" in the present specification.

In general, wide area transmission analog electrical signals for a total of four systems, two systems for orthogonal polarization multiplexing and two systems for quadrature amplitude modulation are prepared (illustrated as four right arrows starting from the wide area digital-analog converting unit 32 in FIG. 1).

Here, the operation speed of the wide area digital-analog converting unit 32 exceeds 100 [Gsample/s], for example.

All of the wide area transmission analog electrical signals for the four systems are transmitted to the wide area light modulating unit 33.

### <<Wide Area Light Modulating Unit 33 Constituting Optical Exchange Device 200>>

The wide area light modulating unit 33 constituting the optical exchange device 200 is a component that modulates an optical carrier wave on the basis of the wide area transmission analog electrical signal.

Here, the electrical band of the wide area light modulating unit 33 is assumed to be equal to or more than several 10 [GHz].

The signal processed by the wide area light modulating unit 33, that is, the modulated optical signal is transmitted to the wide area optical network 300.

The transmission optical switch 34 included in the wide area optical network 300 is a component that receives various optical signals as input, distributes the modulated optical signals to multiple paths, and outputs the modulated optical signals. Specifically, the optical signal input to the transmission optical switch 34 is the modulated optical signal transmitted from the wide area light modulating unit 33 and an optical signal transmitted from another external optical exchange device (not illustrated, 200-other).

The transmission optical switch 34 can transfer a subcarrier generated by the wide area transmission digital signal processing unit 31-m (m=1, 2, ..., M) to a unique destination. The transmission optical switch 34 according to the first embodiment performs the same operation as the path selection performed in the conventional optical operating wavelength channel. The transmission optical switch 34 according to the first embodiment can perform switching related to, for example, a fiber core or the like in a spatial multiplexing optical network in addition to the processing content of path selection functioning as a wavelength selection switch.

The reception optical switch 35 included in the wide area optical network 300 is a component that receives various optical signals as input and multiplexes the input optical signals.

The optical signal multiplexed in the reception optical switch 35 is transmitted to the wide area light detecting unit 36 of the optical exchange device 200 and another external optical exchange device (not illustrated, 200-other).

### <<Wide Area Light Detecting Unit 36 Constituting Optical Exchange Device 200>>

The wide area light detecting unit 36 constituting the optical exchange device 200 is a component that performs coherent detection on the optical signal transmitted from the reception optical switch 35. The signal obtained by the wide area light detecting unit 36 is referred to as a "wide area reception analog electrical signal" in the present specification.

In general, similarly to the wide area transmission analog electrical signal described above, wide area reception analog electrical signals for a total of four systems, two systems for orthogonal polarization multiplexing and two systems for quadrature amplitude modulation are prepared (illustrated as four left arrows starting from the wide area light detecting unit 36 in FIG. 1).

Here, the electric band of the wide area light detecting unit 36 is assumed to be equal to or more than several 10 [GHz], similarly to the wide area light modulating unit 33.

The wide area reception analog electrical signal is transmitted to the wide area analog-digital converting unit 37.

### <<Wide Area Analog-Digital Converting Unit 37 Constituting Optical Exchange Device 200>>

Simply put, the wide area analog-digital converting unit 37 constituting the optical exchange device 200 is a component that performs subcarrier separation by sampling the analog electrical signal transmitted from the wide area light detecting unit 36.

More specifically, the wide area analog-digital converting unit 37 constituting the optical exchange device 200 is a component that performs the following two processes. First, the wide area analog-digital converting unit 37 samples the analog electrical signal transmitted from the wide area light detecting unit 36 and converts the analog electrical signal into a digital signal. Secondly, the wide area analog-digital converting unit 37 separates the digital signal obtained by the sampling into subcarriers in the frequency domain.

Here, the operation speed of the wide area analog-digital converting unit 37 exceeds 100 [Gsample/s], for example.

The M reception subcarrier signals obtained by the separation processing of the wide area analog-digital converting unit 37 are transmitted to the wide area reception digital signal processing unit 38-1, the wide area reception digital signal processing unit 38-2, ..., and the wide area reception digital signal processing unit 38-M.

### <<Wide Area Reception Digital Signal Processing Unit 38 Constituting Optical Exchange Device 200>>

The wide area reception digital signal processing unit 38 constituting the optical exchange device 200 is a component that performs digital signal processing such as waveform distortion compensation and error correction.

More specifically, the wide area reception digital signal processing unit 38-m included in the optical exchange device 200 is a component that performs digital signal processing on the m-th reception subcarrier transmitted from the wide area analog-digital converting unit 37. Examples of the digital signal processing performed by the wide area reception digital signal processing unit 38-m include waveform equalization, clock reproduction, carrier wave restoration, symbol restoration, error correction decoding, decoding processing related to probability shaping of signal point arrangement, partial descrambling processing, and transmission path frame termination processing. Note that, in a case where simple compression processing is performed in the wide area transmission digital signal processing unit 31-m on the transmission side, the wide area reception digital signal processing unit 38-m also performs termination processing thereof.

The signal subjected to the digital signal processing in the wide area reception digital signal processing unit 38-m is referred to as a "wide area reception digital signal" in the present specification. The wide area reception digital signal is transmitted to the exchange unit 20.

A plurality of optical exchange devices 200 according to the first embodiment can be used in cooperation. It is conceivable that the optical exchange device 200-a which is a certain individual (individual a) receives an intensity-modulated optical signal transmitted from the optical exchange device 200-b which is another individual (individual b). Specifically, the intensity-modulated optical signal transmitted from the local parent optical transceiver 13-n₃ (n₃=1, 2, ...) of the optical exchange device 200-b as the individual b can be received by the local parent optical transceiver 13-n of the optical exchange device 200-a as the individual a.

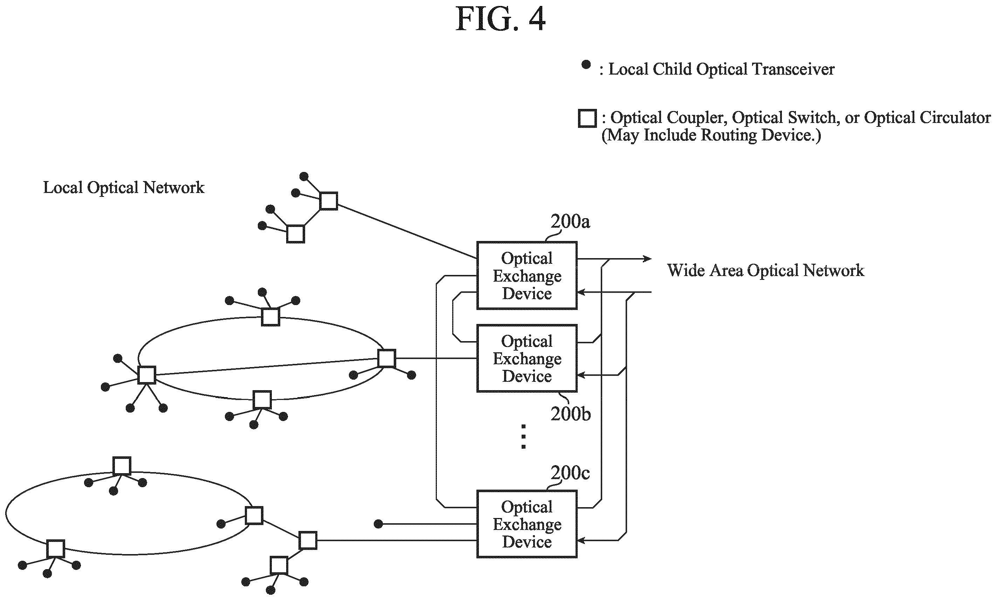

FIG. 4 is an explanatory diagram illustrating a connection example of the optical exchange device 200 according to the present disclosure technology.

As illustrated in FIG. 4, the optical exchange device 200 (200a) according to the present disclosure technology may be connected to a local child optical transceiver not connected to a ring, via an optical coupler, an optical switch, an optical circulator, or a routing device (hereinafter, referred to as an "optical coupler or the like").

As illustrated in FIG. 4, the optical exchange device 200 (200b) according to the present disclosure technology may be connected to a local child optical transceiver connected to a ring, via an optical coupler or the like.

As illustrated in FIG. 4, the optical exchange device 200 (200c) according to the present disclosure technology may be implemented as a part of a function of a certain local child optical transceiver. The optical exchange device 200 (200c) may be implemented as a part of a function of a certain local child optical transceiver, and an optical coupler or the like included in the local child optical transceiver may be connected to an optical coupler or the like of another local child optical transceiver.

As described above, since the optical exchange device 200 according to the first embodiment has the above configuration, the wide area optical network 300 can directly accommodate the finite length signal from the local optical network 100. Since direct accommodation is possible, the present disclosure technology can eliminate a processing delay occurring in the routing device according to the prior art. Furthermore, the present disclosure technology can reduce the number of routers used in the conventional network as much as possible, and also achieves energy saving when the entire network is viewed.

### <<Note: Case Where Present Disclosure Technology Is Applied to Illustrated Example of Non Patent Literature 1>>

"Fronthaul" appearing in FIG. 8-1 of Non Patent Literature 1 is a local optical network (100) assumed by the present disclosure technology.

"DCI" appearing in FIG. 8-1 is a wide area optical network (300) assumed by the present disclosure technology. Here, DCI is an acronym of Data Center Interconnection and means connection between data centers or data center interconnection.

It is conceivable that "DU" appearing in FIG. 8-1 of Non Patent Literature 1 includes a local optical exchange device according to the prior art. Here, DU is an acronym for Distribution Unit and means a remote station.

It is conceivable that "Cloud edge" and "Cloud core" appearing in FIG. 8-1 include a wide area optical exchange device according to the prior art.

"Mid/Backhaul" appearing in FIG. 8-1 of Non Patent Literature 1 is a concept in between a local optical network (100) and the wide area optical network (300) assumed by the present disclosure technology. Therefore, it can be said that the determination as to whether to assume Mid/Backhaul illustrated in Non Patent Literature 1 as local or wide area is case-by-case.

As described above, the optical exchange device 200 according to the present disclosure technology can be applied as a device that connects the fronthaul and the DCI in the arrangement of the network illustrated in FIG. 8-1 of Non Patent Literature 1.

"Metro-edge Fronthaul" appearing in FIG. 8-2 of Non Patent Literature 1 is also a local optical network (100) assumed by the present disclosure technology. In "Metro-edge Fronthaul" appearing in FIG. 8-2, a section from an active antenna unit (AAU) to an orange box (corresponding to a routing device) directly connected to the AAU is a local optical network (100) in a narrow sense.

After "New Core" appearing in FIG. 8-2 of Non Patent Literature 1 (not illustrated), there is a wide area optical network (300) assumed by the present disclosure technology.

It is conceivable that a "New Core" appearing in FIG. 8-2 of Non Patent Literature 1 includes a wide area optical exchange device according to the prior art.

FIG. 8-2 of Non Patent Literature 1 illustrates an example in which a path from the AAU to the DU passes through three (three-stage) routing devices. A line indicated by iridescence that changes stepwise from red to blue in FIG. 8-2 of Non Patent Literature is an optical transmission line (12).

As described above, in the network architecture illustrated in FIG. 8-2 of Non Patent Literature 1, the optical exchange device 200 according to the present disclosure technology can be used instead of any routing device in a path from the AAU to the DU.

AAU to DU + CU (Distribution Unit and Central Unit) appearing in FIG. 8-3 of Non Patent Literature 1 are local optical networks (100) assumed by the present disclosure technology.

There is the wide area optical network (300) assumed by the present disclosure technology is also after "New Core" (not illustrated) appearing in FIG. 8-3 of Non Patent Literature 1.

As described above, the present disclosure technology can also be applied to the network architecture illustrated in FIG. 8-3 of Non Patent Literature 1.

"Metro-Edge" (cloud figure) commonly appearing in FIGS. 8-4 to 8-10 of Non Patent Literature 1 is a local optical network (100) assumed by the present disclosure technology.

From FIG. 8-4 to FIG. 8-10 of Non Patent Literature 1, the wide area optical network (300) assumed by the present disclosure technology is not explicitly described, but the present disclosure technology can also be applied to a network architecture including a local optical network (100) having such a connection relationship.

It can be said that an optical line terminal (OLT) commonly appearing in FIGS. 8-11 to 8-14 of Non Patent Literature 1 is a kind of a local parent optical exchange device which is an optical exchange device on the parent side applied to the local optical network assumed by the present disclosure technology. Although not illustrated in the diagram of Non Patent Literature 1, the child is referred to as an optical network unit (ONU) with respect to the OLT that is the parent. Note that the OLT and the ONU are referred to as optical line terminals without distinction in Japanese.

The OTN commonly appearing in FIG. 8-11 to FIG. 8-14 of Non Patent Literature 1 means an optical transport network as described above, but it is conceivable that the OTN particularly represents a wide area optical exchange device here.

An OADM commonly appearing in FIGS. 8-11 to 8-14 of Non Patent Literature 1 is an optical add-drop multiplexer, that is, an optical branch inserting device, and functions as an optical switch in the wide area optical network (300).

As described above, the present disclosure technology can also be applied to the networks with the connections illustrated in FIGS. 8-11 to 8-14 of Non Patent Literature 1.

### INDUSTRIAL APPLICABILITY

The present disclosure technology can be applied to, for example, a technology for connecting a 5G network and an OTN network, and thus has industrial applicability.

### REFERENCE SIGNS LIST

11: local child optical transceiver, 12: optical transmission line, 13: local parent optical transceiver, 14: local parent analog-digital converting unit, 15: local parent digital-analog converting unit, 20: exchange unit, 31: wide area transmission digital signal processing unit, 32: wide area digital-analog converting unit, 33: wide area light modulating unit, 34: transmission optical switch, 35: reception optical switch, 36: wide area light detecting unit, 37: wide area analog-digital converting unit, 38: wide area reception digital signal processing unit, 100: local optical network, 200: optical exchange device, 300: wide area optical network

## Claims

1. An optical exchange device (200) connecting a local optical network (100) and a wide area optical network (300), the optical exchange device (200) comprising:
a local parent optical transceiver (13) to directly detect an input intensity-modulated optical signal and output a signal obtained by the direct detection as a local reception analog electrical signal;
a local parent analog-digital converting unit (14) to sample the local reception analog electrical signal and output a signal obtained by the sampling as a local reception digital signal;
an exchange unit (20) to distribute the local reception digital signal and M wide area reception digital signals to a local transmission digital signal and M wide area transmission digital signals, and output the local transmission digital signal and the M wide area transmission digital signals, where M is an integer equal to or more than 1;
a local parent digital-analog converting unit (15) to convert the local transmission digital signal into an analog signal;
M wide area transmission digital signal processing units (31-1 to 31-M) to perform digital signal processing on the M wide area transmission digital signals and generate M transmission subcarrier signals for coherent optical communication;
a wide area digital-analog converting unit (32) to perform frequency multiplexing on the M transmission subcarrier signals and convert the multiplexed transmission subcarrier signals into a wide area transmission analog electrical signal; and
a wide area light modulating unit (33) to modulate an optical carrier wave on a basis of the wide area transmission analog electrical signal,
wherein
the local parent analog-digital converting unit (14) is configured to perform the sampling depending on a signal format in which a sampling condition is most severe among assumed signal formats of the local reception analog electrical signal, the assumed signal formats including formats with different rates or different modulation multi-level degrees.

2. The optical exchange device (200) according to claim 1, further comprising:
a wide area light detecting unit (36) to perform coherent detection on an optical signal transmitted from a reception optical switch (35) of the wide area optical network (300) and output a wide area reception analog electrical signal;
a wide area analog-digital converting unit (37) to sample the wide area reception analog electrical signal, convert the wide area reception analog electrical signal into a digital signal, and separate the digital signal into subcarriers in a frequency domain; and
a wide area reception digital signal processing unit (38) to perform digital signal processing on a signal transmitted from the wide area analog-digital converting unit (37) and output the signal as the wide area reception digital signal to the exchange unit(20).

3. An optical exchange method for an optical exchange device (200) connecting a local optical network (100) and a wide area optical network (300), the optical exchange method comprising:
by a local parent optical transceiver (13), directly detecting an input intensity-modulated optical signal and outputting a signal obtained by the direct detection as a local reception analog electrical signal;
by a local parent analog-digital converting unit (14), sampling the local reception analog electrical signal and outputting a signal obtained by the sampling as a local reception digital signal;
by an exchange unit(20), distributing the local reception digital signal and M wide area reception digital signals to a local transmission digital signal and M wide area transmission digital signals, and outputting the local transmission digital signal and the M wide area transmission digital signals, where M is an integer equal to or more than 1;
by a local parent digital-analog converting unit (15), converting the local transmission digital signal into an analog signal;
by M wide area transmission digital signal processing units (31-1 to 31-M), performing digital signal processing on the M wide area transmission digital signals and generating M transmission subcarrier signals for coherent optical communication;
by a wide area digital-analog converting unit (32), performing frequency multiplexing on the M transmission subcarrier signals and converting the multiplexed transmission subcarrier signals into a wide area transmission analog electrical signal; and
by a wide area light modulating unit (33), modulating an optical carrier wave on a basis of the wide area transmission analog electrical signal, wherein
the local parent analog-digital converting unit (14) performs the sampling depending on a signal format in which a sampling condition is most severe among assumed signal formats of the local reception analog electrical signal, the assumed signal formats including formats with different rates or different modulation multi-level degrees.

4. The optical exchange method according to claim 3, further comprising:
by a wide area light detecting unit (36), performing coherent detection on an optical signal transmitted from a reception optical switch (35) of the wide area optical network (300) and outputting a wide area reception analog electrical signal;
by a wide area analog-digital converting unit (37), sampling the wide area reception analog electrical signal, converting the wide area reception analog electrical signal into a digital signal, and separating the digital signal into subcarriers in a frequency domain; and
by a wide area reception digital signal processing unit (38), performing digital signal processing on a signal transmitted from the wide area analog-digital converting unit (37) and outputting the signal as the wide area reception digital signal to the exchange unit (20).

## Patentansprüche

1. Optische Austauschsvorrichtung (200), welche ein lokales optisches Netzwerk (100) und ein Weitbereichs-optisches Netzwerk (300) verbindet, die optische Austauschsvorrichtung (200) umfassend:
einen lokalen Haupt-optischen Sendeempfänger (13), um direkt ein Eingangs-intensitätsmoduliertes optisches Signal zu detektieren und ein Signal, welches durch die direkte Detektion erhalten wird, als ein lokales Empfangs-analoges elektrisches Signal auszugeben;
eine lokale Haupt-Analog-Digital-Umwandlungsvorrichtung (14), um das lokale Empfangs-analoge elektrische Signal abzutasten und ein Signal, welches durch die Abtastung erhalten wird, als ein lokales Empfangs-digitales Signal auszugeben;
eine Austauschsvorrichtung (20), um das lokale Empfangs-digitale Signal und M Weitbereichs-Empfangs-digitale Signale in ein lokales Übertragungs-digitales Signal und M Weitbereichs-Übertragungs-digitale Signale zu verteilen, und das lokale Übertragungs-digitale Signal und die M Weitbereichs-Übertragungs-digitalen Signale auszugeben, wobei M eine ganze Zahl gleich wie oder größer als 1 ist;
eine lokale Haupt-Digital-Analog-Umwandlungsvorrichtung (15), um das lokale Übertragungs-digitale Signal in ein analoges Signal umzuwandeln;
M Weitbereichs-Übertragungs-digitale Signalverarbeitungsvorrichtungen (31-1 bis 31-M), um eine digitale Signalverarbeitung an den M Weitbereichs-Übertragungs-digitalen Signalen durchzuführen und M Übertragungs-Unterträgersignale für kohärente optische Kommunikation zu generieren;
eine Weitbereichs-Digital-Analog-Umwandlungsvorrichtung (32), um eine Frequenzmultiplexierung an den M Übertragungs-Unterträgersignalen durchzuführen und die multiplexierten Übertragungs-Unterträgersignale in ein Weitbereichs-Übertragungs-analoges elektrisches Signal umzuwandeln; und
eine Weitbereichs-Lichtmodulationsvorrichtung (33), um eine optische Trägerwelle auf einer Grundlage des Weitbereichs-Übertragungs-analogen elektrischen Signals zu modulieren,
wobei die lokale Haupt-Analog-Digital-Umwandlungsvorrichtung (14) dazu eingerichtet ist, die Abtastung abhängig von einem Signalformat durchzuführen, bei welchem eine Abtastbedingung unter angenommenen Signalformaten des lokalen Empfangs-analogen elektrischen Signals am schwersten ist, wobei die angenommenen Signalformate Formate mit unterschiedlichen Raten oder unterschiedlichen Modulations-Mehrstufigkeitsgraden umfassen.

2. Optische Austauschsvorrichtung (200) nach Anspruch 1, ferner umfassend:
eine Weitbereichs-Lichtdetektionsvorrichtung (36), um eine kohärente Detektion an einem optischen Signal durchzuführen, welches von einem Empfangs-optischen Schalter (35) des Weitbereichs-optischen Netzwerks (300) übertragen wird, und ein Weitbereichs-Empfangs-analoges elektrisches Signal auszugeben;
eine Weitbereichs-Analog-Digital-Umwandlungsvorrichtung (37), um das Weitbereichs-Empfangs-analoge elektrische Signal abzutasten, das Weitbereichs-Empfangs-analoge elektrische Signal in ein digitales Signal umzuwandeln, und das digitale Signal in einem Frequenzbereich in Unterträger zu separieren; und
eine Weitbereichs-Empfangs-digitale Signalverarbeitungsvorrichtung (38), um eine digitale Signalverarbeitung an einem Signal, welches von der Weitbereichs-Analog-Digital-Umwandlungsvorrichtung (37) übertragen wird, durchzuführen und das Signal als das Weitbereichs-Empfangs-digitale Signal an die Austauschsvorrichtung (20) auszugeben.

3. Optisches Austauschsverfahren für eine optische Austauschsvorrichtung (200), welche ein lokales optisches Netzwerk (100) und ein Weitbereichs-optisches Netzwerk (300) verbindet, das Verfahren umfassend:
mittels eines lokalen Haupt-optischen Sendeempfängers (13), ein Eingangs-intensitätsmoduliertes optisches Signal direkt zu detektieren und ein Signal, welches durch die direkte Detektion erhalten wird, als ein lokales Empfangs-analoges elektrisches Signal auszugeben;
mittels einer lokalen Haupt-Analog-Digital-Umwandlungsvorrichtung (14), das lokale Empfangs-analoge elektrische Signal abzutasten und ein Signal, welches durch die Abtastung erhalten wird, als ein lokales Empfangs-digitales Signal auszugeben;
mittels einer Austauschsvorrichtung (20), das lokale Empfangs-digitale Signal und M Weitbereichs-Empfangs-digitale Signale in ein lokales Übertragungs-digitales Signal und M Weitbereichs-Übertragungs-digitale Signale zu verteilen, und das lokale Übertragungs-digitale Signal und die M Weitbereichs-Übertragungs-digitalen Signale auszugeben, wobei M eine ganze Zahl gleich wie oder größer als 1 ist;
mittels einer lokalen Haupt-Digital-Analog-Umwandlungsvorrichtung (15), das lokale Übertragungs-digitale Signal in ein analoges Signal umzuwandeln;
mittels M Weitbereichs-Übertragungs-digitalen Signalverarbeitungsvorrichtungen (31-1 bis 31-M), eine digitale Signalverarbeitung an den M Weitbereichs-Übertragungs-digitalen Signalen durchzuführen und M Übertragungs-Unterträgersignale für kohärente optische Kommunikation zu generieren;
mittels einer Weitbereichs-Digital-Analog-Umwandlungsvorrichtung (32) eine Frequenzmultiplexierung an den M Übertragungs-Unterträgersignalen durchzuführen und die multiplexierten Übertragungs-Unterträgersignale in ein Weitbereichs-Übertragungs-analoges elektrisches Signal umzuwandeln; und
mittels einer Weitbereichs-Lichtmodulationsvorrichtung (33), eine optische Trägerwelle auf einer Grundlage des Weitbereichs-Übertragungs-analogen elektrischen Signals zu modulieren, wobei
die lokale Haupt-Analog-Digital-Umwandlungsvorrichtung (14) die Abtastung abhängig von einem Signalformat durchführt, bei welchem eine Abtastbedingung unter angenommenen Signalformaten des lokalen Empfangs-analogen elektrischen Signals am schwersten ist, wobei die angenommenen Signalformate Formate mit unterschiedlichen Raten oder unterschiedlichen Modulations-Mehrstufigkeitsgraden umfassen.

4. Optisches Austauschsverfahren nach Anspruch 3, ferner umfassend:
mittels einer Weitbereichs-Lichtdetektionsvorrichtung (36), eine kohärente Detektion an einem optischen Signal durchzuführen, welches von einem Empfangs-optischen Schalter (35) des Weitbereichs-optischen Netzwerks (300) übertragen wird, und ein Weitbereichs-Empfangs-analoges elektrisches Signal auszugeben;
mittels einer Weitbereichs-Analog-Digital-Umwandlungsvorrichtung (37), das Weitbereichs-Empfangs-analoge elektrische Signal abzutasten, das Weitbereichs-Empfangs-analoge elektrische Signal in ein digitales Signal umzuwandeln, und das digitale Signal in einem Frequenzbereich in Unterträger zu separieren; und
mittels einer Weitbereichs-Empfangs-digitalen Signalverarbeitungsvorrichtung (38), eine digitale Signalverarbeitung an einem Signal, welches von der Weitbereichs-Analog-Digital-Umwandlungsvorrichtung (37) übertragen wird, durchzuführen und das Signal als das Weitbereichs-Empfangs-digitale Signal an die Austauschsvorrichtung (20) auszugeben.

## Revendications

1. Dispositif d'échange optique (200) connectant un réseau optique local (100) et un réseau optique étendu (300), le dispositif d'échange optique (200) comprenant :
un émetteur-récepteur optique parent local (13) pour détecter directement un signal optique modulé en intensité entré et émettre un signal obtenu par la détection directe en tant que signal électrique analogique de réception locale ;
une unité de conversion analogique-numérique parent locale (14) pour échantillonner le signal électrique analogique de réception locale et émettre un signal obtenu par l'échantillonnage en tant que signal numérique de réception locale ;
une unité d'échange (20) pour distribuer le signal numérique de réception locale et M signaux numériques de réception étendue à un signal numérique de transmission locale et à M signaux numériques de transmission étendue, et émettre le signal numérique de transmission locale et les M signaux numériques de transmission étendue, M étant un nombre entier égal ou supérieur à 1 ;
une unité de conversion numérique-analogique parent locale (15) pour convertir le signal numérique de transmission locale en un signal analogique ;
M unités de traitement de signal numérique de transmission étendue (31-1 à 31-M) pour réaliser un traitement de signal numérique sur les M signaux numériques de transmission étendue et générer M signaux de sous-porteuse de transmission pour une communication optique cohérente ;
une unité de conversion numérique-analogique étendue (32) pour réaliser un multiplexage en fréquence sur les M signaux de sous-porteuse de transmission et convertir les signaux de sous-porteuse de transmission multiplexés en un signal électrique analogique de transmission étendue ; et
une unité de modulation de lumière étendue (33) pour moduler une onde porteuse optique sur la base du signal électrique analogique de transmission étendue,
dans lequel
l'unité de conversion analogique-numérique parent locale (14) est configurée pour réaliser l'échantillonnage en fonction d'un format de signal dans lequel une condition d'échantillonnage est la plus sévère parmi les formats de signal supposés du signal électrique analogique de réception locale, les formats de signal supposés incluant des formats avec des taux différents ou des degrés de modulation multiniveaux différents.

2. Dispositif d'échange optique (200) selon la revendication 1, comprenant en outre :
une unité de détection de lumière étendue (36) pour réaliser une détection cohérente sur un signal optique transmis à partir d'un commutateur optique de réception (35) du réseau optique étendu (300) et émettre un signal électrique analogique de réception étendue ;
une unité de conversion analogique-numérique étendue (37) pour échantillonner le signal électrique analogique de réception étendue, convertir le signal électrique analogique de réception étendue en un signal numérique, et séparer le signal numérique en sous-porteuses dans un domaine fréquentiel ; et
une unité de traitement de signal numérique de réception étendue (38) pour réaliser un traitement de signal numérique sur un signal transmis par l'unité de conversion analogique-numérique étendue (37) et émettre le signal sous la forme du signal numérique de réception étendue vers l'unité d'échange (20).

3. Procédé d'échange optique pour un dispositif d'échange optique (200) connectant un réseau optique local (100) et un réseau optique étendu (300), le procédé d'échange optique comprenant :
par un émetteur-récepteur optique parent local (13), la détection directe d'un signal optique modulé en intensité entré et l'émission d'un signal obtenu par la détection directe en tant que signal électrique analogique de réception locale ;
par une unité de conversion analogique-numérique parent locale (14), l'échantillonnage du signal électrique analogique de réception locale et l'émission d'un signal obtenu par l'échantillonnage en tant que signal numérique de réception locale ;
par une unité d'échange (20), la distribution du signal numérique de réception locale et des M signaux numériques de réception étendue à un signal numérique de transmission locale et M signaux numériques de transmission étendue, et l'émission du signal numérique de transmission locale et des signaux numériques de transmission étendue, M étant un nombre entier égal ou supérieur à 1 ;
par une unité de conversion numérique-analogique parent locale (15), la conversion du signal numérique de transmission locale en un signal analogique ;
par M unités de traitement de signal numérique de transmission étendue (31-1 à 31-M), la réalisation d'un traitement de signal numérique sur les M signaux numériques de transmission étendue et la génération de M signaux de sous-porteuse de transmission pour une communication optique cohérente ;
par une unité de conversion numérique-analogique étendue (32), la réalisation d'un multiplexage en fréquence sur les M signaux de sous-porteuse de transmission et la conversion des signaux de sous-porteuse de transmission multiplexés en un signal électrique analogique de transmission étendue ; et
par une unité de modulation de lumière étendue (33), la modulation d'une onde porteuse optique sur la base du signal électrique analogique de transmission étendue,
dans lequel
l'unité de conversion analogique-numérique parent locale (14) réalise l'échantillonnage en fonction d'un format de signal dans lequel une condition d'échantillonnage est la plus sévère parmi des formats de signal supposés du signal électrique analogique de réception locale, les formats de signal supposés incluant des formats avec des taux différents ou des degrés de modulation multiniveaux différents.

4. Procédé d'échange optique selon la revendication 3, comprenant en outre :
par une unité de détection de lumière étendue (36), la réalisation d'une détection cohérente sur un signal optique transmis à partir d'un commutateur optique de réception (35) du réseau optique étendu (300) et l'émission d'un signal électrique analogique de réception étendue ;
par une unité de conversion analogique-numérique étendue (37), l'échantillonnage du signal électrique analogique de réception étendue, la conversion du signal électrique analogique de réception étendue en un signal numérique, et la séparation du signal numérique en sous-porteuses dans un domaine fréquentiel ; et
par une unité de traitement de signal numérique de réception étendue (38), la réalisation d'un traitement de signal numérique sur un signal transmis par l'unité de conversion analogique-numérique étendue (37) et l'émission du signal en tant que signal numérique de réception étendue vers l'unité d'échange (20).
